# EUROPEAN PATENT SPECIFICATION

(11) **EP 1 365 607 B1**
(45) Date of publication and mention of the grant of the patent: **01.03.2006**
(21) Application number: 03011233.8
(22) Date of filing: 16.05.2003
(51) Int. Cl.: H04Q 7/32

(54) **SMS message storing method of GSM terminal**
Verfahren zum Speichern von SMS Kurznachrichten in einem GSM Endgerät
Procédé pour mémoriser des messages courts SMS dans un terminal GSM

(30) Priority: 24.05.2002 KR 2002029010
(43) Date of publication of application: 26.11.2003
(73) Proprietor: LG ELECTRONICS INC., Seoul (KR)
(72) Inventor: Kim, Hyun-Sung, Bupyung-Gu, Incheon (KR)
(74) Representative: von Hellfeld, Axel

(56) References cited:
- WO-A-02/09460
- WO-A-02/25976
- US-A- 5 687 216
- "Digital cellular telecommunications system (Phase 2+); Alphabets and language-specific information (GSM 03.38 version 7.2.0 Release 1998)" ETSI TS 100 900 V7.2.0, July 1999 (1999-07), pages 1-20, XP002256265

## Description

### BACKGROUND OF THE INVENTION

### 1. Field of the Invention

The present invention relates to a global system for mobile communication (GSM) terminal, and in particular to a short message service (SMS) message storing method which is capable of storing a SMS message efficiently according to Class information.

### 2. Description of the Prior Art

Recently, with the rapid popularization of a mobile communication terminal, usage of a mobile communication terminal is greatly increased in comparison with usage of a general telephone in home or an office. The mobile communication terminal is a handheld terminal capable of transmitting/receiving voice, character and picture information wirelessly, it can perform not only a general voice communication service but also various message transmission services, and it is largely divided into a GSM (global system for mobile communication) terminal and a CDMA (code division multiple access) terminal.

The GSM terminal is European terminal using a time division multiple access (TDMA) technique, and it uses a subscriber identity module (SIM) card in order to identify and authenticate a subscriber. The SIM card is a smart card attached/detached to/from the GSM terminal and consists of a microprocessor and a memory. The memory can store personal information (e.g. authentication information) of an owner, various information (telephone number and network number) for operating the terminal and SMS messages.

Accordingly, a user can receive a request communication service after installing a SIM card in a GSM terminal supporting a SIM interface and passing a user authentication process.

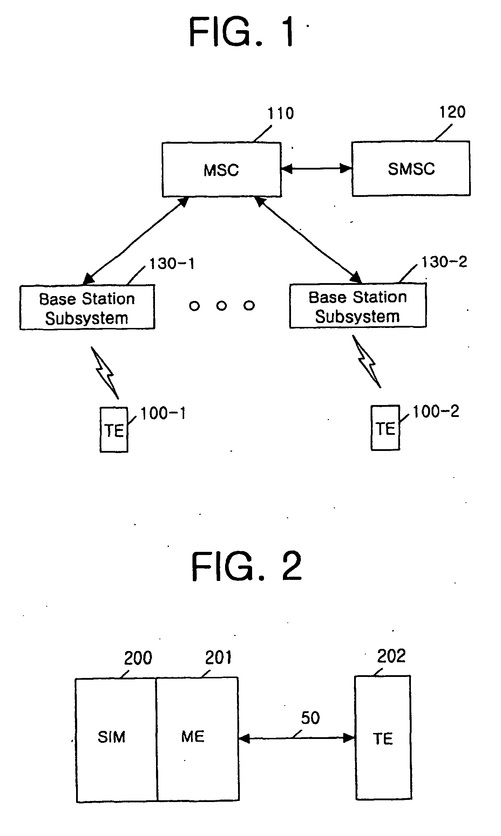

Figure 1 is a block diagram illustrating a general GSM (global system for mobile communication) system.

As depicted in Figure 1, the GSM system includes GSM terminals 100-1, 100-2; a mobile switching center (MSC) 110; and a SMS service center (SMSC) 120 contacted to the MSC 110 in order to relay a SMS message transmitted between the GSM terminals 100-1, 100-2.

The GSM terminals 100-1, 100-2 communicate with the MSC 110 through base station subsystem 130-1, 130-2 respectively, and the SMSC 120 is connected to the MSC 110 through a SMS gateway. Herein, the base station subsystems 130-1, 130-2 respectively include a base station controller (BSC) and plural base stations (BSs).

In addition, each GSM terminal 100-1, 100-2 includes a SIM card 200 and a ME (mobile equipment) 201 and is connected to an external terminal equipment TE) 202 such as a workstation and a serial PC through an I/O connector 50.

The ME 201 is a part except the SIM 200 in the GSM terminal, it constructs the GSM terminal by combining with the SIM card 200. The ME 201 includes an internal memory, and the internal memory stores short messages and various information.

In the above-mentioned GSM system, a short message storing method of a GSM terminal will be described.

A SMS message written in the GSM terminal 100-1 is transmitted to the SMSC 120 through the base station subsystem 130-1 and the MSC 110. The SMSC 120 discriminates a called number and transmits the received SMS message to the GSM terminal 100-2 through the MSC 110 and the base station subsystem 130-2.

Herein, in transmission of the SMS message, the SMSC 120 transmits Class information for designating a position for storing a pertinent SMS message, and the Class information can be Classified following four types.
1) Class 0: Display only
2) Class 1: Store a SMS message in the ME (internal memory of the terminal)
3) Class 2: Store the SMS message in the SIM card
4) Class 3: Store the SMS message in the TE

The above SMS Classes are set forth in more detail in the technical specification ETSI TS 100 900 V7.2.0, "Digital cellular telecommunications system (Phase 2+); Alphabets and language-specific information (GSM 03.38 version 7.2.0 release 1998)" of July 1999.

In more detail, in a case for only displaying the SMS message, the SMSC 120 transmits Class 0, in a case for storing the SMS in the ME 201, the SMSC 120 transmits Class 1. In a case for storing the SMS in the SIM card 200, the SMSC 120 transmits Class 2, and in a case for storing the SMS message in the external TE 202, the SMSC 120 transmits Class 3. In addition, the SMSC 120 can transmit the SMS message without designating SMS Class information.

Accordingly, when the SMS message is received from the SMSC 120, the GSM terminal 100-2 checks whether there is Class information in the received SMS message, when there is the Class information, the SMS message is displayed or is stored in one of the SIM card 200, the ME 201 and the TE 202 by referring to the pertinent Class information.

On the contrary, when there is no Class information in the received SMS message, the GSM terminal 100-2 stores the SMS message according to a preset storing priority order. For example, the GMS terminal 100-2 stores the received SMS message in the SIM card 200 first, or, the GSM terminal 100-2 stores the SMS message in the ME 201 only when a message storage of the SIM card 200 is full.

As described, above, when the SMSC does not transmit Class information, the GSM terminal stores the received message in the SIM card first according to the preset storing priority order. However, when the storage of the SIM card is full, if a SMS message having Class 2 is additionally received, although there is a sufficient storing space in the internal memory of the ME, the GSM terminal can not receive the Class 2 type SMS message any more.

In addition, when the internal memory of the ME is full, if a SMS message designated in Class 1 is received, the GSM terminal can not receive the SMS message any more.

In order to solve the above-mentioned problem, because the terminal user has to check SMS messages stored in the terminal and delete unnecessary messages, it is inconvenient for the user.

Accordingly, in the conventional SMS storing method of the GSM terminal, it is impossible to store SMS message efficiently in a request storing region according to SMS Class, and accordingly reliability of the SMS service may be lowered due to the message reception rate lowering problem.

WO 02/09460 A1 discloses a method for storing SMS messages in a mobile station. The SMS messages are delivered to the mobile station from a message centre to include a validity period field containing information on a validity period of the SMS message. In case of a shortage of available memory in the mobile station at the time of arrival of a new SMS message, validity periods of earlier stored messages are checked. In one embodiment, a stored message having a validity period soon to expire is transferred from a first memory to a second memory to provide space for the newly arrived message in the first memory. The second memory can be internal or external to the mobile station.

### SUMMARY OF THE INVENTION

It is an object of the present invention to provide an SMS message storing method of a GSM terminal which is capable of using message storing space efficiently, improving the SMS message reception rate and guaranteeing reliability of SMS service.

To achieve the above object, the present invention provides a method according to claim 1.

Preferred embodiments of the method according to the present invention are given in the dependent sub-claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram illustrating a general global system for mobile communication (GSM) system;
Figure 2 illustrates a connection relation among a SIM, a ME and a TE of the GSM system in Figure 1;
Figure 3 is a flow chart illustrating a short message service (SMS) message storing method of a GSM terminal in accordance with a first embodiment of the present invention; and
Figure 4 is a flow chart illustrating a SMS message storing method of a GSM terminal in accordance with a second embodiment of the present invention.

### DETAILED DESCRIPTION OF THE PREFERRED EMBODIMENT

Hereinafter, the preferred embodiments of the present invention will be described with reference to accompanying drawings.

In general, because a storing position of a received SMS message is determined according to SMS Class thereof, a message reception rate is determined according to utilization capacity and a size of a memory. In the present invention, by transferring a certain SMS message stored in a subscriber identity module (SIM) card and an internal memory of a mobile equipment (ME) into another region, a memory can be used efficiently, and accordingly it is possible to improve a SMS message reception rate. Herein, the SMS message transferring is performed on the basis of SMS Class.

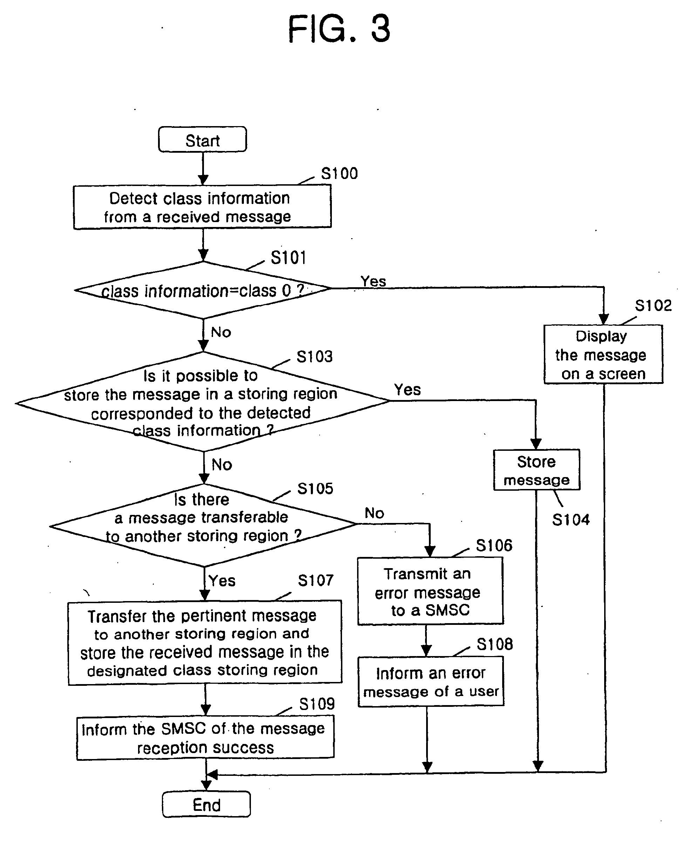

Figure 3 is a flow chart illustrating a SMS message storing method of a GSM terminal in accordance with a first embodiment of the present invention, and the method is performed in the GSM system in Figure 1. Herein, for convenience, it is assumed a SMS message is transmitted from a GSM terminal 100-2 to a GSM terminal 100-1.

When the SMS message is received from the SMSC 120, the GSM terminal 100-1 detects Class information of the SMS message and judges whether the detected Class information is 'Class 0' as shown at steps S100 and S101.

In the judging result, when the detected Class information is 'Class 0', the GSM terminal 100-1 displays the pertinent SMS message on a screen as shown at step S102, when the detected Class information is not 'Class 0' (Class 1 or Class 2), the GSM terminal 100-1 checks a state of a storing region corresponding to the detected Class information. Preferably, the storing region is one of the SIM card or the ME.

If it is not possible to store the SMS message in the storing region, in more detail, when an empty region does not exist, the GSM terminal 100-1 checks whether there is a transferable message, for example, a class not given message exists as shown at step S105.

In the checking result, when the transferable message does not exist, the GSM terminal 100-1 transmits a reception error message indicating a reception reject to the SMSC 120 and informs a user of the message reception error.

On the contrary, when the transferable message exists, the GSM terminal 100-1 generates an empty region by transferring the Class not given message to another storing region and stores the new SMS message in the empty region. Preferably, the SMS message can be transferred from the SIM card to the ME or from the ME to the TE.

When the SMS message storing is finished, the GSM terminal 100-1 transmits a signal for informing a reception success to the SMSC 120. Afterward, when a new SMS message is received again, the SMS message is stored in the SIM and the ME through the above-described process.

As described above, the first embodiment of the present invention can be applied to a case of receiving a SMS message through a certain application when the GSM terminal 100-1 is connected to the external terminal equipment (TE) 202 through an I/O connector thereof.

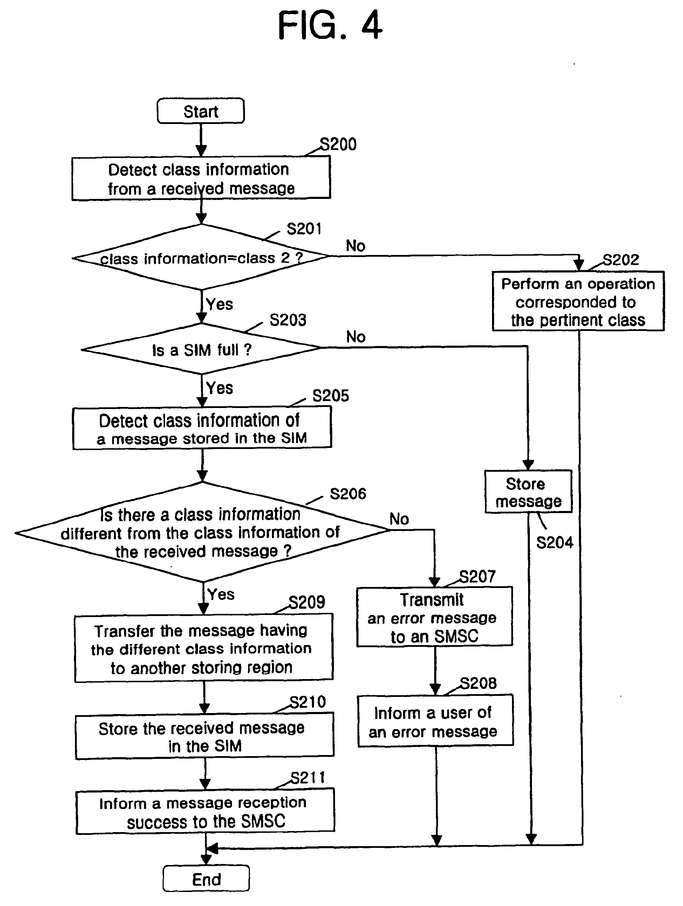

Figure 4 is a flow chart illustrating a SMS message storing method of a GSM terminal in accordance with a second embodiment of the present invention. The second embodiment can be applied when the GSM terminal is not connected to the TE 200.

As depicted in Figure 4, when a SMS message is received, the GSM terminal 100-1 detects Class information of the SMS message and judges whether the detected Class information is Class 2 as shown at steps S200 and S201.

In the judging result, when the detected Class information is not Class 2, the GSM terminal 100-1 performs a storing operation corresponding to the respective Class as shown at step S202, when the detected Class information is Class 2, the GSM terminal 100-1 checks whether the storing region of the SIM card is full as shown at step S203. Herein, the process order (S200~S203) can be varied as occasion demands, for example, the Step S203 can be performed first, and the steps S200, S201 can be performed later.

When the storing region of the SIM card is not full, the new SMS message is stored in the SIM card as shown at step S204, when the storing region of the SIM card is full, Class information of the SMS message stored in the SIM card is detected as shown at step S205, and it is checked whether a SMS message having Class information different from Class 2, namely, a Class not given message exists as shown at step S206.

If there is no Class not given message in the SIM card, in more detail, only Class 2 type SMS messages are stored in the SIM card, the GSM terminal 100-1 transmits a reception error signal for indicating a new SMS message reception impossible state to the SMSC 120 and informs the user of the message reception error as shown at steps S207 and S208.

On the contrary, if a Class not given message exists in the SIM card, the GSM terminal 100-1 transfers the Class not given message from the SIM card to the ME and stores the received new SMS message in the SIM card as shown at steps S209 and S210. And, when the new message storing is finished, the GSM terminal 100-1 transmits a message reception success signal as shown at step S211.

In the present invention, the SMS message storing method is described with the GSM terminal 100-1, however, it is the same with the GSM terminal 100-2.

As described above, in the present invention, in a GSM terminal which sets a storing region according to SMS Class, when a storing space of a SMS message corresponded to each SMS Class is insufficient, by transferring a SMS message having different Class information in a pertinent storing region to another storing region, a new SMS message can be stored in the pertinent storing region.

Accordingly, in the present invention, it is possible to store a received SMS message in a storing region corresponding to Class information and improve usage efficiency of SMS storing region, and accordingly a SMS message reception rate can be improved.

In addition, by preventing a SMS message reception error occurred due to SMS message storing region shortage, usage reliability of the terminal can be improved.

## Claims

1. A short message service (SMS) message storing method of a mobile communication terminal (100-1, 100-2), comprising:
- detecting an SMS class of a received first message;
- checking (S103) whether there is an empty region in a first storing region corresponding to the detected SMS class;
**characterized by** the steps of:
- detecting (S105; S206) a transferable second message in the first storing region when there is no empty region in the first storing region, the second message being one that differs from the detected SMS class of the first message; and
- transferring (S107; S209) the detected second message to a second storing region and storing (S107) the first message in the first storing region.

2. The method of claim 1, wherein the first and second messages are SMS messages.

3. The method of claim 1, further comprising the step of displaying (S102) the first message without storing it when the detected SMS class is 0 or 3.

4. The method of claim 1, wherein the first storing region is an internal memory of a mobile equipment (201) and the second storing region is an internal memory of a terminal equipment (202) when the detected SMS class is 1.

5. The method of claim 1, wherein the first storing region is a subscriber identity module (200) and the second storing region is an internal memory of a mobile equipment (201) when the detected SMS class is 2.

6. The method of claim 1, wherein the second message is a message without SMS class information.

7. The method of one of the preceding claims, further comprising the step of rejecting (S106, S108; S207, S208) reception of the first message when no empty storing region and no transferable second message exist in the second storing region.

## Patentansprüche

1. Verfahren zum Speichern von Nachrichten in einem Kurznachrichtendienst (SMS) bei einer mobilen Kommunikationseinrichtung (100-1, 100-2), folgende Schritte umfassend:
- Ermitteln einer SMS-Klasse bei einer empfangenen ersten Nachricht;
- Prüfen (S103), ob sich ein freier Bereich in einem ersten Speicherbereich findet, welcher der ermittelten SMS-Klasse entspricht;
**gekennzeichnet durch** folgende Schritte:
- Ermitteln (S105; S206) einer übertragbaren zweiten Nachricht in dem ersten Speicherbereich, wenn kein freier Bereich in dem ersten Speicherbereich vorhanden ist, wobei die zweite Nachricht eine ist, die sich von der ermittelten SMS-Klasse der ersten Nachricht unterscheidet; und
- Übertragen (S107; S209) der ermittelten zweiten Nachricht zu einem zweiten Speicherbereich und Abspeichern (S107) der ersten Nachricht in dem ersten Speicherbereich.

2. Verfahren nach Anspruch 1, wobei die ersten und zweiten Nachrichten SMS-Nachrichten sind.

3. Verfahren nach Anspruch 1, wobei weiterhin folgender Schritt vorgesehen ist: Anzeigen (S102) der ersten Nachricht ohne ihre Speicherung, wenn die ermittelte SMS-Klasse 0 oder 3 ist.

4. Verfahren nach Anspruch 1, wobei der erste Speicherbereich ein interner Speicher einer mobilen Ausrüstung (201) und der zweite Speicherbereich ein interner Speicher eines Anschlussgerätes (202) ist, wenn die ermittelte SMS-Klasse 1 ist.

5. Verfahren nach Anspruch 1, wobei der erste Speicherbereich ein Teilnehmer-Identitätsmodul (200) und der zweite Speicherbereich ein interner Speicher einer mobilen Ausrüstung (201) ist, wenn die ermittelte SMS-Klasse 2 ist.

6. Verfahren nach Anspruch 1, wobei die zweite Nachricht eine Nachricht ohne SMS-Klasseninformation ist.

7. Verfahren nach einem der vorhergehenden Ansprüche, weiterhin folgenden Schritt aufweisend: Abweisen (S106, S108; S207, S208) des Empfangs der ersten Nachricht wenn kein freier Speicherbereich und keine übertragbare zweite Nachricht in dem zweiten Speicherbereich vorliegt.

## Revendications

1. Procédé de mémorisation de messages pour service de messages courts (SMS) de terminal de communication mobile (100-1, 100-2), comprenant les étapes consistant à :
- détecter une classe SMS d'un premier message reçu ;
- vérifier (S103) s'il y a ou non un espace vide dans une première région de mémorisation, correspondant à la classe SMS détectée ;
**caractérisé par** les étapes consistant à :
- détecter (S105 ; S206) un deuxième message transférable dans la première région de mémorisation s'il n'y a pas de région vide dans la première région de mémorisation, le deuxième message étant un message qui diffère de la classe SMS détectée du premier message ; et
- transférer (S107 ; S209) le deuxième message détecté à une deuxième région de mémorisation et mémoriser (S107) le premier message dans la première région de mémorisation.

2. Procédé selon la revendication 1, dans lequel les premier et deuxième messages sont des messages SMS.

3. Procédé selon la revendication 1, comprenant en outre l'étape d'affichage (S102) du premier message sans le mémoriser quand la classe SMS détectée est de 0 à 3.

4. Procédé selon la revendication 1, dans lequel la première région de mémorisation est une mémoire interne d'un équipement mobile (201) et la deuxième région de mémorisation est une mémoire interne d'un équipement terminal (202) si la classe SMS détectée est 1.

5. Procédé selon la revendication 1, dans lequel la première région de mémorisation est un module d'identité d'abonné (200) et la deuxième région de mémorisation est une mémoire interne d'un équipement mobile (201) si la classe SMS détectée est 2.

6. Procédé selon la revendication 1, dans lequel le deuxième message est un message sans information de classe SMS.

7. Procédé selon l'une quelconque des revendications présentes, comprenant en outre l'étape consistant à rejeter (S106, S108 ; S207, S208) du premier message s'il n'y a pas de région de mémorisation vide et s'il n'existe pas de deuxième message transférable dans la deuxième région de mémorisation.
